Europäisches Patentamt

European Patent Office

Office européen des brevets

(19)

(11) Veröffentlichungsnummer: **0 250 860 B1**

# (12) EUROPÄISCHE PATENTSCHRIFT

(45) Veröffentlichungstag der Patentschrift:
18.12.91 Patentblatt 91/51

(51) Int. Cl.$^5$: **C08F 10/02, C08F 4/62**

(21) Anmeldenummer: 87107541.2

(22) Anmeldetag: 23.05.87

(54) Verfahren zum Herstellen von Homo-sowie Copolymerisaten des Ethens durch Phillips-Katalyse.

(30) Priorität: 30.05.86 DE 3618259

(43) Veröffentlichungstag der Anmeldung:
07.01.88 Patentblatt 88/01

(45) Bekanntmachung des Hinweises auf die
Patenterteilung:
18.12.91 Patentblatt 91/51

(84) Benannte Vertragsstaaten:
AT BE DE FR GB IT NL

(56) Entgegenhaltungen:
DE-A- 3 609 828
US-A- 2 887 471
US-A- 4 328 124
US-A- 4 404 340

(73) Patentinhaber: BASF Aktiengesellschaft
Carl-Bosch-Strasse 38
W-6700 Ludwigshafen (DE)

(72) Erfinder: Konrad, Rainer, Dr.
Gartenweg 7
W-6701 Goennheim (DE)
Erfinder: Mueller-Mall, Rudolf
Ulmenweg 39
W-6708 Neuhofen (DE)
Erfinder: Schweier, Guenther, Dr.
Friedrich-Pietzsch-Strasse 14
W-6701 Friedelsheim (DE)

EP 0 250 860 B1

## Beschreibung

Die vorliegende Erfindung liegt im Rahmen eines Verfahrens zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoalkenen durch Polymerisation des bzw. der Monomeren bei Temperaturen von 30 bis 150, insbesondere 60 bis 120°C und Drücken von 2 bis 150, insbesondere von 5 bis 60 bar, durch Phillips-Katalyse mittels

(1) eines Trägerkatalysators aus einem Trägerstoff, der mit oxidisch vorliegendem Chrom, oxidisch vorliegendem Phosphor sowie oxidisch vorliegendem Titan beladen ist, und

(2) eines Cokatalysators,

wobei der Trägerkatalysator (1) erhalten worden ist, indem man

(1.1) in einer ersten Stufe ein mit den gewünschten Mengen Chrom, Phosphor sowie Titan beladenes Katalysator-Vorprodukt (1.1) herstellt aus

(1.1.a) einem feinteiligen, porösen silikatischen Trägerstoff,

(1.1.b) einer ausgewählten, spezifischen Chromverbindung,

(1.1.c) einer ausgewählten, spezifischen Phosphorverbindung sowie

(1.1.d) einer ausgewählten, spezifischen Titanverbindung, und dann

(1.2) in einer zweiten Stufe das aus der ersten Stufe erhaltene Katalysator-Vorprodukt (1.1) in einem wasserfreien, Sauerstoff in einer Konzentration von über 10 Vol.-% enthaltene Gasstrom 10 bis 1000, insbesondere 60 bis 300 Minuten auf einer Temperatur von 300 bis 900, insbesondere 400 bis 600°C hält (d.h. "calziniert" bzw. "aktiviert") und so in den eigentlichen Trägerkatalysator (1) überführt.

Polymerisationsverfahren dieser Gattung sind bekannt, wobei im gegebenen Zusammenhang als repräsentativ z.B. die in den US-PSen 4 328 124 und 4 404 340 beschriebenen gelten können.

Ein charakteristisches Merkmal jener Verfahren ist, daß Trägerkatalysatoren eingesetzt werden, bei deren Herstellung man in der ersten Stufe - also zur Gewinnung des Katalysator-Vorprodukts - ein in einer ersten Unterstufe aus einer ausgewählten Phosphor- und einer ausgewählten Titanverbinung gewonnenes Zwischenprodukt in einer zweiten Unterstufe mit einer ausgewählten Chromverbindung unter chemischer Reaktion in einem Lösungsmittel umsetzt und dann mit dem dabei erhaltenen Umsetzungsprodukt den Trägerstoff belädt.

Als bemerkenswert im gegebenen Zusammenhang können z.B. auch die Polymerisationsverfahren einer verwandten aber anderen Gattung gelten, die in den US-PSen 3 984 351 und 3 985 676 beschrieben sind.

Ein wesentliches Merkmal dieser Verfahren ist, daß Trägerkatalysatoren eingesetzt werden, bei denen das Einbringen einer Phosphor-Komponente dadurch bewirkt wird, daß zum Herstellen des Katalysator-Vorproduktes ein Trägerstoff mit dem Umsetzungsprodukt einer ausgewählten Chrom- mit einer ausgewählten Phosphorverbindung vereinigt wird.

Im gegebenen Zusammenhang sind schließlich noch von Interesse Polymerisationsverfahren einer ebenfalls verwandten aber wiederum anderen Gattung, von denen sich repräsentative Beschreibungen z.B. in der GB-PS 1 391 771 sowie der US-PS 4 368 302 finden.

Ein signifikantes Merkmal dieser Verfahren ist, daß Trägerkatalysatoren eingesetzt werden, die auf einem Katalysator-Vorprodukt basieren, das durch Vereinigen eines bereits mit der Chromkomponente beladenen Trägerstoffs mit einer Titanverbindung erhalten wird.

Die im vorstehenden abgehandelten Polymerisationsverfahren haben zum Kernstück eine in besonderer Weise ausgestalte Phillips-Katalyse, namentlich eine solche mit einem Trägerkatalysator, der nicht nur oxidisch vorliegendes Chrom, sondern auch oxidisch vorliegendes Phosphor und/oder oxidisch vorliegendes Titan enthält - wobei der Gehalt an letzteren bewirkt, daß Polymerisate mit einer verbreiterten Molmassenverteilung und-/oder einem erhöhten Schmelzindex erhalten werden, also Polymerisate die aufgrund ihrer guten Verarbeitbarkeit für bestimmte Anwendungsgebiete, z.B. das Blasformverfahren, bevorzugt geeignet sind.

Die bekannten Polymerisationsverfahren der in Rede stehenden Art liefern zwar Polymerisate mit einer verbreiterten Molmassenverteilung und/oder einem erhöhten Schmelzindex, jedoch mit einer unbefriedigenden Produktivität, d.h. mit einer unbefriedigenden Ausbeute an Polymerisat pro Gewichtseinheit eingesetztem Trägerkatalysator und/oder es entstehen Polymerisate mit unbefriedigenden morphologischen Eigenschaften, z.B. einem hohen Gehalt an staubförmigen Partikeln.

Hier setzt die Aufgabe an, die zur vorliegenden Erfindung geführt hat: Ein Verfahren der eingangs definierten Art so weiterzubilden, daß es die vorstehend beschriebenen Nachteile nicht oder in erheblich vermindertem Maß aufweist.

Es wurde gefunden, daß diese Aufgabe gelöst werden kann, wenn man bei dem in Rede stehenden Polymerisationsverfahren

(1) einen Trägerkatalysator einsetzt, der erhalten worden ist, indem man - jeweils in der Art und nach der

2

Weise spezifisch - (1.1) in einer ersten Stufe (1.1.1) zunächst aus (1.1.1.1) einem feinteiligen silikatischen Trägerstoff und (1.1.1.2) einem inerten organischen Lösungsmittel eine Suspension herstellt, (1.1.2) dann aus (1.1.2.1) Chromtrioxid und (1.1.2.2) einem inerten organischen Lösungsmittel eine Suspension herstellt, (1.1.3) hierauf (1.1.3.1) die aus (1.1.2) resultierende Suspension mit (1.1.3.2) einer Phosphorverbindung der Formel $P(O)(OR)_3$ oder $P(O)H(OR)_2$ - worin R steht für eine Alkyl-, Aryl- oder Cycloalkylgruppe oder für Wasserstoff, mit der Maßgabe, daß mindestens ein R nicht für Wasserstoff steht - vereinigt, (1.1.4) danach (1.1.4.1) die aus (1.1.1) resultierende Suspension mit (1.1.4.2) dem aus (1.1.3) erhaltenen Umsetzungsprodukt vereinigt, (1.1.5) daraufhin (1.1.5.1) die in (1.1.4) entstandene Suspension mit (1.1.5.2) einer Titanverbindung der Formel $Ti(OR^1)_4$ - worin $R^1$ steht für eine Alkyl-, Aryl- oder Cycloalkylgruppe - vereinigt, und (1.1.6) schließlich die in (1.1.5) gewonnene Suspension bis zur Trockene eindampft, und dann (1.2) in der zweiten Stufe zunächst (1.2.1) das aus der ersten Stufe (1.1) erhaltene Katalysator-Vorprodukt mit einem Stickstoffstrom behandelt, hierauf (1.2.2) das aus (1.2.1) erhaltene Zwischenprodukt in einem Sauerstoff enthaltenden Gasstrom erhitzt, und schließlich (1.2.3) das aus (1.2.2) erhaltene Zwischenprodukt mit einem Stickstoffstrom behandelt, sowie

(2)    als Cokatalysator ein Lithiumalkyl verwendet. Gegenstand der vorliegenden Erfindung ist dementsprechend ein Verfahren zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoalkenen durch Polymerisation des bzw. der Monomeren bei Temperaturen von 30 bis 150, insbesondere 60 bis 120°C und Drücken von 2 bis 150, insbesondere 5 bis 60 bar, durch Phillips-Katalyse mittels

(1)    eines Trägerkatalysators aus einem Trägerstoff, der mit oxidisch vorliegendem Chrom, oxidisch vorliegendem Phosphor sowie oxidisch vorliegendem Titan beladen ist, und

(2)    eines Cokatalysators,

wobei der Trägerkatalysator (1) erhalten worden ist, indem man

(1.1)    in einer ersten Stufe ein mit den gewünschten Mengen Chrom, Phosphor sowie Titan beladenes Katalysator-Vorprodukt (1.1) herstellt aus

(1.1.a)    einem feinteiligen, porösen, silikatischen Trägerstoff,

(1.1.b)    einer ausgewählten, spezifischen Chromverbindung,

(1.1.c)    einer ausgewählten, spezifischen Phosphorverbindung sowie

(1.1.d)    einer ausgewählten, spezifischen Titanverbindung

und dann

(1.2)    in einer zweiten Stufe das aus der ersten Stufe erhaltene Katalysator-Vorprodukt (1.1) in einem wasserfreien, Sauerstoff in einer Konzentration von über 10 Vol.-% enthaltenen Gasstrom 10 bis 1000, insbesondere 60 bis 300 Minuten auf einer Temperatur von 300 bis 900, insbesondere 400 bis 600°C hält (d.h. "calziniert", bzw. "aktiviert") und so in den eigentlichen Trägerkatalysator (1) überführt.

Das erfindungsgemäße Verfahren ist dadurch gekennzeichnet, daß man

(1)    einen Trägerkatalysator einsetzt, der erhalten worden ist, indem man

(1.1)    in einer ersten Stufe ein Katalysator-Vorprodukt herstellt, indem man zunächst

(1.1.1)    in einer ersten Unterstufe aus

(1.1.1.1)    einem feinteiligen, porösen, silikatischen Trägertoff, der einen Teilchendurchmesser von 1 bis 400, vorzugsweise 10 bis 200 μm, ein Porenvolumen von 0,5 bis 3, vorzugsweise 1 bis 2,5 cm³/g sowie eine Oberfläche von 100 bis 1000, vorzugsweise 200 bis 700 m²/g besitzt, und

(1.1.1.2)    einem inerten organischen Lösungsmittel, vorzugsweise einem flüssig vorliegenden aliphatischen, cycloaliphatischen oder aromatischen Chlorkohlenwasserstoff, und insbesondere einem $C_1$- bis $C_3$-Chloralkan, das 2 bis 4 Chloratome aufweist,

    unter guter Durchmischung eine Suspension herstellt, mit der Maßgabe, daß auf 100 Gewichtsteile des Trägerstoffs (1.1.1.1) 150 bis 5000, vorzugsweise 200 bis 1000 Gewichtsteile des Lösungsmittels (1.1.1.2) entfallen, dann

(1.1.2)    in einer zweiten Unterstufe aus

(1.1.2.1)    einem feinteiligen, einen Teilchendurchmesser von weniger als 2000, vorzugsweise weniger als 500 μm aufweisenden Chromtrioxid ($CrO_3$) und

(1.1.2.2)    einem Lösungsmittel der unter (1.1.1.2) bezeichneten Art unter guter Durchmischung eine Suspension herstellt, mit der Maßgabe, daß auf 1 Gewichtsteil des Chromtrioxids (1.1.2.1) mehr als 1, vorzugsweise 20 bis 200 Gewichtsteile des Lösungsmittels (1.1.2.2) entfallen, hierauf

(1.1.3)    in einer dritten Unterstufe mit

(1.1.3.1)    die aus (1.1.2) resultierende Suspension mit

(1.1.3.2)    einer Phosphorverbindung der Formel $P(O)(OR)_3$ oder $P(O)H(OR)_2$ - worin R steht für eine Alkyl-, Aryl- oder Cycloalkylgruppe, die nicht mehr als 12, vorzugsweise nicht mehr als 6 Kohlenstoffatome aufweist oder für Wasserstoff und insbesondere eine $C_2$- bis $C_4$-Alkylgruppe oder Wasser-

stoff, mit der Maßgabe, daß mindestens ein R nicht für Wasserstoff steht - unter weiterer guter Durchmischung bei einer Temperatur von 0 bis 60, vorzugsweise 10 bit 30°C vereinigt, mit der Maßgabe, daß auf 1 Gewichtsteil Chrom aus dem Chromtrioxid (1.1.2.1) 0,6 bis 10, vorzugsweise 0,6 bis 3 Gewichtsteile Phosphor aus der Phosphorverbindung (1.1.3.2.) entfallen, und das Ganze 5 bit 300, vorzugsweise 20 bit 60 Minuten bei der genannten Temperatur hält, danach

(1.1.4) in einer vierten Unterstufe,

(1.1.4.1) die aus (1.1.1) resultierende Suspension mit

(1.1.4.2) dem aus der Unterstufe (1.1.3) erhaltenen Umsetzungsprodukt

unter guter Durchmischung bei einer Temperatur von 0 bis 60, vorzugsweise 10 bis 30°C vereinigt, mit der Maßgabe, daß auf 100 Gewichtsteile des Trägerstoffs (1.1.1.1) 0,1 bis 5, vorzugsweise 0,5 bis 2 Gewichtsteile Chrom aus dem Chromtrioxid (1.1.2.1) entfallen, und das Ganze 5 bis 300, vorzugsweise 20 bis 60 Minuten bei der genannten Temperatur hält, daraufhin

(1.1.5) in einer fünften Unterstufe

(1.1.5.1) die in Unterstufe (1.1.4) entstandene Suspension mit

(1.1.5.2) einer Titanverbindung der Formel $Ti(OR^1)_4$ - worin $R^1$ steht für eine Alkyl-, Aryl- oder Cycloalkylgruppe, die nicht mehr als 12 Kohlenstoffatome aufweist, vorzugsweise eine $C_2$- bis $C_4$-Alkylgruppe, und insbesondere die iso-Propylgruppe -,

unter weiterer guter Durchmischung bei einer Temperatur von 0 bis 60, vorzugsweise 10 bis 30°C vereinigt, mit der Maßgabe, daß auf 100 Gewichtsteile des Trägerstoffs (1.1.1.1) 0,1 bis 10, vorzugsweise 1 bis 6 Gewichtsteile Titan aus der Titanverbindung (1.1.5.2) entfallen, und das Ganze 5 bis 300, vorzugsweise 20 bis 60 Minuten bei der genannten Temperatur hält, und schließlich

(1.1.6) in einer sechsten Unterstufe die in Unterstufe (1.1.5) gewonnene Suspension bei einer Temperatur von nicht mehr als 150, vorzugsweise nicht mehr als 80°C - gegebenenfalls unter vermindertem Druck - bis zur Trockene eindampft,

und dann

(1.2) in einer zweiten Stufe das aus der ersten Stufe (1.1) erhaltene Katalysator-Vorprodukt in den eigentlichen Trägerkatalysator überführt, indem man zunächst

(1.2.1) in einer ersten Unterstufe das aus der ersten Stufe (1.1) erhaltene Katalysator-Vorprodukt in einem wasserfreien Stickstoffstrom 60 bis 500, insbesondere 100 bis 300 Minuten auf einer Temperatur von 150 bis 300, insbesondere 200 bis 270°C hält, hierauf

(1.2.2) in einer zweiten Unterstufe das aus Unterstufe (1.2.1) erhaltene Zwischenprodukt in einem wasserfreien, Sauerstoff in einer Konzentration von über 10 Vol.-% enthaltenen Gasstrom 10 bis 1000, insbesondere 60 bis 300 Minuten auf einer Temperatur von 300 bis 900, insbesondere 400 bis 600°C hält, und schließlich

(1.2.3) in einer dritten Unterstufe das aus Unterstufe (1.2.2) erhaltene Zwischenprodukt in einem wasserfreien Stickstoffstrom 10 bis 300, insbesondere 30 bis 150 Minuten auf einer Temperatur von 50 bis 400, insbesondere 100 bis 270°C hält,

sowie

(2) als Cokatalysator einsetzt ein Lithiumalkyl der Formel $LiR^2$ - worin $R^2$ steht für eine $C_1$- bis $C_{12}$-, insbesondere eine $C_2$-bis $C_4$-Alkylgruppe -,

mit der Maßgabe, daß das Atomverhältnis Chrom im Trägerkatalysator (1): Lithium im Cokatalysator (2) größer als 1 : 100 und insbesondere 1 : 1 bis 1 : 20 ist.

Zu dem erfindungsgemäßen Polymerisationsverfahren in seinem Gesamtaspekt ist das Folgende zu sagen:

Das Polymerisationsverfahren als solches kann - unter Beachtung der erfindungsgemäßen Besonderheit - in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisationsverfahren im gerührten oder gewirbelten Bett. Die erwähnten technologischen Ausgestaltungen - mit anderen Worten: die technologischen varianten der Polymerisation von Olefinen nach Phillips - sind aus der Literatur und Praxis wohlbekannt, so daß sich insoweit nähere Ausführungen zu ihnen erübrigen.

Es ist indes hervorzuheben, daß die erfindungsgemäße Arbeitsweise vorzugsweise durchgeführt wird im Rahmen eines Verfahrens zum kontinuierlichen Herstellen partikelförmiger Homopolymerisate oder Copolymerisate durch Polymerisation des bzw. der Monomoren in einem flüssig vorliegenden $C_4$- bis $C_5$-Alkan - worin sich das zu polymerisierende Monomere bzw. Monomerengemisch in gelöster Form, das gebildete partikelförmige Polymerisat in suspendierter Form befinden - als Reaktionsmedium, - gegebenenfalls - in Gegenwart eines Antistatikums als Wandbelagverhinderungsmittel ("antifouling agent") sowie - gegebenenfalls - von Wasserstoff als Molekulargewichtsregler, unter Führen des Reaktionsgemischs als Kreisstrom, welchem die Ausgangsstoffe zugegeben werden und das gebildete partikelförmige Polymerisat entzogen wird. Polymerisationsverfahren dieser Gattung, d.h. Verfahren zum Herstellen von Homo- und Copolymerisaten des Ethylens durch Suspensionspolymerisation des bzw. der Monomeren in einem flüssig vorliegenden Alkan, sind in mannigfachen Ausgestaltungen bekannt; hierzu kann im gegebenen Zusammenhang auf die in den GB-PS 841 263 und 1 435 965 sowie den US-PS 3 242 150 und 4 007 321 beschriebenen Arbeitsweisen, als exemplarischen Beispielen, verwiesen werden.

Weiterhin ist noch zu bemerken, daß der neue Trägerkatalysator (1) - wie entsprechende bekannte Katalysatoren - z.B. außerhalb oder innerhalb des Polymerisationsraumes mit dem Cokatalysator (2) zusammengebracht werden kann; im letztgenannten Fall etwa durch räumlich getrennten Eintrag der Komponenten, die in übrigen in Form einer Suspension (Katalysator) bzw. Lösung (Cokatalysator) gehandhabt werden können.

Schließlich ist noch zu sagen, daß sich das neue Polymerisationsverfahren vornehmlich zum Herstellen solcher Ethen-Homopolymerisate sowie Ethen-Copolymerisate - letztere insbesondere mit Propen, Buten-1, Hexen-1, 4-Methylpenten-1 bzw. Octen-1 - eignet, die einen angehobenen Schmelzindex und eine breite Molmassenverteilung bei einem geringen Anteil feinteiligen Polymerisats - insbesondere einem solchen mit einem Teilchendurchmesser von weniger als 125 µm - haben sollen (also Polymerisaten, wie sie z.B. beim Blasformverfahren bevorzugt Anwendung finden), wobei zudem eine gute Produktivität, d.h. eine hohe Ausbeute an Polymerisat pro Gewichtseinheit eingesetztem Trägerkatalysator erzielt wird.

Zu dem erfindungsgemäß einzusetzenden neuen Trägerkatalysator (1) selbst ist das Folgende zu sagen:

Seine Herstellung erfolgt in zwei Stufen, die oben sowie nachstehend mit (1.1) und (1.2) bezeichnet sind.

In der ersten Stufe (1.1) erfolgt die Herstellung des Katalysatorvorprodukts über sechs Unterstufen (1.1.1), (1.1.2), (1.1.3), (1.1.4), (1.1.5) und (1.1.6), deren Durchführung für den Fachmann ohne Schwierigkeiten und ohne weiteres möglich ist. Er wird dabei zweckmäßigerweise mit einer Apparatur arbeiten, die eine dauernde, möglichst homogene Durchmischung der jeweiligen Ansätze unter einer inerten Schutzatmosphäre, wie Stickstoffatmosphäre, erlaubt. Er wird ferner zweckmäßigerweise in den Unterstufen (1.1.3), (1.1.4) sowie (1.1.5) die Phosphorverbindung (1.1.3.2), das Umsetzungsprodukt (1.1.4.2) bzw. die Titanverbindung (1.1.5.2) nicht schlagartig, sondern eher allmählich in die jeweils vorliegende Suspension (1.1.3.1), (1.1.4.1) bzw. (1.1.5.1) einbringen. Schließlich wird er den Eindampfvorgang in Unterstufe (1.1.6) schonend gestalten, - wozu sich z.B. Rotationsverdampfer anbieten.

In der zweiten Stufe (1.2) wird das aus der ersten Stufe (1.1) erhaltene Katalysator-Vorprodukt im Zuge von drei Unterstufen (1.2.1), (1.2.2) und (1.2.3) in den eigentlichen Trägerkatalysator übergeführt. Auch die Durchführung dieser Verfahrensschritte ist für den Fachmann ohne Schwierigkeiten und ohne weiteres möglich. Die hierzu zweckmäßigen Vorrichtungen und Arbeitsmethoden sind die zum "Calzinieren" bzw. "Aktivieren" von Phillips-Trägerkatalysatoren üblichen und an sich wohlbekannten. Dies bedeutet für die zweite Unterstufe (1.2.2), daß Bedingungen zu wählen sind, die gewährleisten, daß im fertigen Trägerkatalysator das Chrom, zumindest teilweise, im sechswertigen Zustand vorliegt; insoweit ist hier also gegenüber dem Stand der Technik keine Besonderheit gegeben. Die erfindungsgemäßen Besonderheiten der zweiten Stufe (1.2) liegen vielmehr in der vorgeschalteten Unterstufe (1.2.1) sowie der nachgeschalteten Unterstufe (1.2.3), ohne die die erfindungsgemäße Zielsetzung nicht zu erreichen ist. Zur letztgenannten Unterstufe (1.2.3) ist zu bemerken, daß sie - nicht nötigerweise, aber aus ökonomischen Gründen - zweckmäßigerweise mit einem Abkühlvorgang im Bereich der angegebenen kritischen Zeit- und Temperaturspanne verbunden wird.

Die stoffliche Seite des neuen Trägerkatalysators (1) betreffend ist zu sagen, daß bei seiner Herstellung - generell - die Anwesenheit von Wasser soweit wie möglich ausgeschlossen werden sollte. Dies beginnt beim Trägerstoff (1.1.1.1), den man vor seinem Einsatz - wie einschlägig üblich - scharf trocknen sollte, z.B. für 8 Stunden bei einer Temperatur von 140°C unter einem Druck von 2,67 kPa (20 Torr). Das gleichfalls einzusetzende inerte organische Lösungsmittel (1.1.1.2) - hier eignen sich vor allem Chlorkohlenwasserstoffe, wie, besonders, Dichlormethan, aber auch z.B. Trichlormethan, Tetrachlorkohlenstoff oder Trichlorethen sind geeignet - sollte möglichst weniger als 0,1 Gew.-% Wasser enthalten. Der Wassergehalt des Chromtrioxids (1.1.2.1) sollte 1 Gew.-% nicht übersteigen. Als einzusetzende Phosphorverbindung (1.1.3.2), die ebenfalls maximal 1 Gew.-% Wasser enthalten sollte, eignen sich vor allem Diethylphosphit, Dibutylphosphit, Diethylphosphat sowie Di-n-butylphosphat, aber auch z.B. Dimethylphosphit, Diisopropylphosphit, Diphenylphosphit, Diphenylphosphat, Trimethylphosphat sowie Triphenylphosphat sind geeignet. Die schließlich zu verwendende Titanverbindung (1.1.5.2) ist relativ stark hydrolyseempfindlich; sie enthält aus diesem Grund per se allenfalls minimale Mengen an Wasser. Für den erfindungsgemäßen Zweck geeignete Titanverbindungen sind - neben dem besonders zu bevorzugenden Titan(IV)-tetraisopropylat - beispielsweise auch Titan(IV)-tetraethylat, Titan(IV)-tetra-n-propylat sowie Titan(IV)-tetra-n-butylat.

Bei dem erfindungsgemäßen Polymerisationsverfahren ist nicht nur ein Trägerkatalysator (1) einzusetzen, sondern auch ein Cokatalysator (2) in Gestalt eines bestimmten Lithiumalkyls. Namentliche Beispiele für besonders geeignete einschlägige Cokatalysatoren sind n-Butyllithium, sec.-Butyllithium sowie tert.-Butyllithium; geeignet sind aber auch z.B. Ethyllithium, n-Propyllithium und iso-Propyllithium.

Beispiel

Herstellen des Trägerkatalysators (1)

(1.1)      In einer ersten Stufe wird ein Katalysator-Vorprodukt hergestellt, indem man zunächst

(1.1.1.)      in einer ersten Unterstufe aus

(1.1.1.1)      einem feinteiligen, porösen, silikatischen Trägerstoff, der einen Teilchendurchmesser von 30 bis 100μm, ein Porenvolumen von 1,75 cm³/g sowie eine Oberfläche von 320 m²/g besitzt (8 Stunden bei 140°C und 2,67 kPa (20 Torr) getrocknet), und

(1.1.1.2)      wasserfreiem Dichlormethan

unter Argonatmosphäre sowie guter Durchmischung mittels Rühren eine Suspension herstellt, mit der Maßgabe, daß auf 100 Gewichtsteile des Trägerstoffs (1.1.1.1) 400 Gewichtsteile des organischen Lösungsmittels (1.1.1.2) entfallen, dann

(1.1.2)      in einer zweiten Unterstufe aus

(1.1.2.1)      einem feinteiligen, einen Teilchendurchmesser von weniger als 500 μm aufweisenden Chromtrioxid ($CrO_3$) und

(1.1.2.2)      dem Lösungsmittel der unter (1.1.1.2) bezeichneten Art

unter guter Durchmischung eine Suspension herstellt, mit der Maßgabe, daß auf 1 Gewichsteil des Chromtrioxids (1.1.2.1) 50 Gewichsteile des Lösungsmittels (1.1.2.2) entfallen, hierauf

(1.1.3)      in einer dritten Unterstufe

(1.1.3.1)      die aus (1.1.2) resultierende Suspension mit

(1.1.3.2)      einer Phosphorverbindung der Formel $P(O)H(OR)_2$ -worin R steht für die Ethylgruppe -

unter weiterer guter Durchmischung bei einer Temperatur von 20°C vereinigt, mit der Maßgabe, daß auf 1 Gewichtsteil Chrom aus dem Chromtrioxid (1.1.2.1) 1 Gewichtsteil Phosphor aus der Phosphorverbindung (1.1.3.2) entfällt, und das Ganze 30 Minuten bei der genannten Temperatur hält, danach

(1.1.4)      in einer vierten Unterstufe

(1.1.4.1)      die aus (1.1.1) resultierende Suspension mit

(1.1.4.2)      dem aus der Unterstufe (1.1.3) erhaltenen Umsetzungsprodukt

unter guter Durchmischung bei einer Temperatur von 20°C vereinigt, mit der Maßgabe, daß auf 100 Gewichtsteile des Trägerstoffs (1.1.1.1) 1 Gewichtsteil Chrom aus dem Chromtrioxid (1.1.2.1) entfällt, und das Ganze 30 Minuten bei der genannten Temperatur hält, daraufhin

(1.1.5)      in einer fünften Unterstufe

(1.1.5.1)      die in Unterstufe (1.1.4) entstandene Suspension mit

(1.1.5.2)      einer Titanverbindung der Formel $Ti(OR^1)_4$ - worin $R^1$ steht für die iso-Propylgruppe -

unter weiterer guter Durchmischung bei einer Temperatur von 20°C vereinigt, mit der Maßgabe, daß auf 100 Gewichtsteile des Trägerstoffs (1.1.1.1) 4 Gewichtsteile Titan aus der Titanverbindung (1.1.5.2) entfallen, und das Ganze 30 Minuten bei der genannten Temperatur hält, und schließlich

(1.1.6)      in einer sechsten Unterstufe die in Unterstufe (1.1.5) gewonnene Suspension bei einer Temperatur von bis zu 80°C unter vermindertem Druck (bis zu 20 Torr) in einem Rotationsverdampfer bis zur Trockene eindampft.

(1.2)      In einer zweiten Stufe wird das aus der ersten Stufe (1.1) erhaltene Katalysator-Vorprodukt in den eigentlichen Trägerkatalysator überführt, indem man - jeweils mittels eines Fließbettes - zunächst -

(1.2.1)      in einer ersten Unterstufe das aus der ersten Stufe (1.1) erhaltene Katalysator-Vorprodukt in einem wasserfreien Stick-, stoffstrom 120 Minuten auf einer Temperatur von 250°C hält, hierauf

(1.2.2)      in einer zweiten Unterstufe das aus Unterstufe (1.2.1) erhaltene Zwischenprodukt in einem wasserfreien Luftstrom 60 Minuten auf einer Temperatur von 500°C hält, und schließlich

(1.2.3)      in einer dritten Unterstufe das aus Unterstufe (1.2.2) erhaltene Zwischenprodukt in einem wasserfreien Stickstoffstrom 60 Minuten auf einer von 250 auf 100°C sinkenden Temperatur hält.

Polymerisation mittels des Trägerkatalysators (1) sowie des Cokatalysators (2)

Ein Stahlautoklav mit 1 Liter Nutzvolumen und mit Rührer wird auf 95°C erhitzt und 10 Minuten mit trockenem Stickstoff gespült. Danach wird 1 ml einer 10 g n-Butyllithium als Cokatalysator (2) pro 1 n-Heptan enthaltenden Lösung und 500 ml Isobutan in den Reaktor eingeführt. Durch Zufuhr von Ethen wird dann der Druck auf 40 bar erhöht und nach Einbringen von 80 mg des Trägerkatalysators (1) mit Hilfe einer Schleuse - entsprechend einem Atomverhältnis Chrom im Trägerkatalysator : Lithium im Cokatalysator von 1 : 10 - während der Polymerisation aufrechterhalten. Nach 60 Minuten bei einer Polymerisationstemperatur von 95 ± 2°C wird der Autoklav unter Verdampfen des Isobutens und des nicht umgesetzten Ethens entspannt und das erhaltene Polymerisat entnommen.

Nähere Angaben zu dem so erhaltenen Verfahrensprodukt finden sich in der unten stehenden Tabelle.

## Vergleichsversuch 1

Es wurde in Identität zum Beispiel gearbeitet, mit den Ausnahmen, daß man beim Herstellen des Trägerkatalysators (1) im Zuge der ersten Stufe (1.1)

(1.1.3) in der dritten Unterstufe

(1.1.3.2) anstelle einer Phosphorverbindung der Formel $P(O)H(OR)_2$ - worin R steht für die Ethylgruppe - einsetzt das in einer separaten Unterstufe durch Vereinigen einer Phosphorverbindung der Formel $P(O)OH(OR)_2$ - worin R steht für die Butylgruppe - mit einer Titanverbindung der Formel $Ti(OR^1)_4$ - worin $R^1$ steht für die iso-Propylgruppe - in wasserfreiem Dichlormethan unter guter Durchmischung bei einer Temperatur von 20°C entstandene Umsetzungsprodukt, mit der Maßgabe, daß auf 1 Mol Chrom aus dem Chromtrioxid (1.1.2.1) 1 Mol Phosphor aus der Phosphorverbindung sowie 1 Mol Titan aus der Titanverbindung entfallen und

(1.1.5) die fünfte Unterstufe entfallen läßt.

Nähere Angaben zu dem hierbei erhaltenen Verfahrensprodukt finden sich ebenfalls in den Tabelle.

## Vergleichsversuch 2

Es wurde wiederum in Indentität zum Beispiel gearbeitet, mit der Ausnahme, daß beim Herstellen des Trägerkatalysators (1) im Zuge der ersten Stufe (1.1)

(1.1.5) die fünfte Unterstufe entfällt.

Nähere Angaben zu dem hierbei erhaltenen Verfahrensprodukt finden sich ebenfalls in der Tabelle.

## Vergleichsversuch 3

Es wurde ebenfalls in Indentität zum Beispiel gearbeitet, mit den Ausnahmen, daß man beim Herstellen des Trägerkatalysators (1) im Zuge der ersten Stufe (1.1)

(1.1.1) in der ersten Unterstufe

(1.1.1.1) anstelle des silikatischen Trägerstoffs einsetzt, einen feinteiligen, porösen, silikatischen Trägerstoff, der 1 Gew.-% Chrom als Chromtrioxid enthält und unter dem Handelsnamen 969 MS von der Firma Grace GmbH erhältlich ist (8 Stunden bei 140°C und 20 Torr getrocknet), und

(1.1.1.2) anstelle des wasserfreien Dichlormethans wasserfreies n-Heptan einsetzt, sowie

(1.1.2) die zweite Unterstufe,

(1.1.3) die dritte Unterstufe sowie

(1.1.4) die vierte Unterstufe entfallen läßt.

Nähere Angaben zu dem dabei erhaltenen Verfahrensprodukt sind wiederum der folgenden Tabelle zu ent-nehmen.

## Tabelle

| | Produktivität [a] (gPE/gKat.) | HLMI [b] (g/10 Min.) | Mw/Mn [c] | < 125 µm [d] % |
|---|---|---|---|---|
| Beispiel | 3900 | 6,0 | 32,3 | 0,2 |
| Vergleichs-versuch 1 | 1800 | < 0,5 | n.b.[x] | 0,2 |
| Vergleichs-versuch 2 | 1500 | < 0,5 | n.b. [x] | 0,1 |
| Vergleichs-versuch 3 | 2600 | 6,0 | 32,0 | 3,2 |

[a]   Gramm Polymerisat pro Gramm Trägerkatalysator (1).

[b]   Nach DIN 53 735 bei 190°C/21,6 Kp.

[c]   Quotient aus Gewichts- und Zahlmittelwert der Molekular-masse (Mw/Mn) durch Gel-Permeations-Chromatographie bestimmt. (Große Werte für Mw/Mn entsprächen einer breiten Molmassen-verteilung und umgekehrt).

[d]   Teilchendurchmesser des Polymerisats gemäß Siebanalyse.

[x]   n.b. = nicht bestimmbar.

Die in den Vergleichsversuchen erhaltenen Verfahrensprodukte besitzen einen deutlich kleineren Schmelzindex bzw. einen wesentlich höheren Gehalt an staubförmigen Partikeln bei einer niedrigeren Produktivität als das erfindungsgemäß hergestellte Verfahrensprodukt.

## Patentansprüche

1. Verfahren zum Herstellen von Ethen Homopolymerisaten sowie Ethen-Copolymerisaten mit untergeordneten Mengen an einpolymerisierten $C_3$- bis $C_{12}$-$\alpha$-Monoalkenen durch Polymerisation des bzw. der Monomeren bei Temperaturen von 30 bis 150°C und Drücken von 2 bis 150 bar, durch Phillips-Katalyse mittels

(1)   eines Trägerkatalysators aus einem Trägerstoff, der mit oxidisch vorliegendem Chrom, oxidisch vorliegendem Phosphor sowie oxidisch vorliegendem Titan beladen ist, und

(2)   eines Cokatalysators,

wobei der Trägerkatalysator (1) erhalten worden ist, indem man

(1.1)   in einer ersten Stufe ein mit den gewünschten Mengen Chrom, Phosphor sowie Titan beladenes Katalysator-Vorprodukt (1.1) herstellt aus

(1.1.a)   einem feinteiligen, porösen, silikatischen Trägerstoff,

(1.1.b)   einer ausgewählten, spezifischen Chromverbindung,

(1.1.c)   einer ausgewählten, spezifischen Phosphorverbindung sowie

(1.1.d)   einer ausgewählten, spezifischen Titanverbindung,

und dann

(1.2)   in einer zweiten Stufe das aus der ersten Stufe erhaltene Katalysator-Vorprodukt (1.1) in einem wasserfreien, Sauerstoff in einer Konzentration von über 10 Vol.-% enthaltene Gasstrom 10 bis 1000 Minuten auf einer Temperatur von 300 bis 900°C hält und so in den eigentlichen Trägerkatalysator (1) überführt,

dadurch gekennzeichnet, daß man

(1)   einen Trägerkatalysator einsetzt, der erhalten worden ist, indem man

(1.1)   in einer ersten Stufe ein Katalysator-Vorprodukt herstellt, indem man zunächst

(1.1.1)   in einer ersten Unterstufe aus

(1.1.1.1)    einem feinteiligen, porösen, silikatischen Trägerstoff, der einen Teilchendurchmesser von 1 bis 400 µm, ein Porenvolumen von 0,5 bis 3 cm³/g sowie eine Oberfläche von 100 bis 1000 m²/g besitzt, und

(1.1.1.2)    einem inerten organischen Lösungsmittel

unter guter Durchmischung eine Suspension herstellt, mit der Maßgabe, daß auf 100 Gewichtsteile des Trägerstoffs (1.1.1.1) 150 bis 5000 Gewichtsteile des Lösungsmittels (1.1.1.2) entfallen, dann

(1.1.2)    in einer zweiten Unterstufe aus

(1.1.2.1)    einem feinteiligen, einen Teilchendurchmesser von weniger als 2000 µm aufweisenden Chromtrioxid (CrO₃) und

(1.1.2.2)    einem Lösungsmittel der unter (1.1.1.2) bezeichneten Art

unter guter Durchmischung eine Suspension herstellt, mit der Maßgabe, daß auf 1 Gewichtsteil des Chromtrioxids (1.1.2.1) mehr als 1 Gewichtsteil des Lösungsmittels (1.1.2.2) entfällt, hierauf

(1.1.3)    in einer dritten Unterstufe

(1.1.3.1)    die aus (1.1.2) resultierende Suspension mit

(1.1.3.2)    einer Phosphorverbindung der Formel P(O)(OR)₃ oder P(O)H(OR)₂ - worin R steht für eine Alkyl-, Aryl- oder Cycloalkylgruppe, die nicht mehr als 12 Kohlenstoffatome aufweist oder für Wasserstoff, mit der Maßgabe, daß mindestens ein R nicht für Wasserstoff steht -

unter weiterer guter Durchmischung bei einer Temperatur von 0 bis 60°C vereinigt, mit der Maßgabe, daß auf 1 Gewichtsteil Chrom aus dem Chromtrioxid (1.1.2.1) 0,6 bis 10 Gewichtsteile Phosphor aus der Phosphorverbindung (1.1.3.2) entfallen, und das Ganze 5 bis 300 Minuten bei der genannten Temperatur hält, danach

(1.1.4)    in einer vierten Unterstufe

(1.1.4.1)    die aus (1.1.1) resultierende Suspension mit

(1.1.4.2)    dem aus der Unterstufe (1.1.3) erhaltenen Umsetzungsprodukt

unter guter Durchmischung bei einer Temperatur von 0 bis 60°C vereinigt, mit der Maßgabe, daß auf 100 Gewichtsteile des Trägerstoffs (1.1.1.1) 0,1 bis 5 Gewichtsteile Chrom aus dem Chromtrioxid (1.1.2.1) entfallen, und das Ganze 5 bis 300 Minuten bei der genannten Temperatur hält, daraufhin

(1.1.5)    in einer fünften Unterstufe

(1.1.5.1)    die in Unterstuffe (1.1.4) entstandene Suspension mit

(1.1.5.2)    einer Titanverbindung der Formel Ti(OR¹)₄ - worin R¹ steht für eine Alkyl-, Aryl- oder Cycloalkylgruppe, die nicht mehr als 12 Kohlenstoffatome aufweist,

unter weiterer guter Durchmischung bei einer Temperatur von 0 bis 60°C vereinigt, mit der Maßgabe, daß auf 100 Gewichtsteile des Trägerstoffs (1.1.1.1) 0,1 bis 10 Gewichtsteile Titan aus der Titanverbindung (1.1.5.2) entfallen, und das Ganze 5 bis 300 Minuten bei der genannten Temperatur hält, und schließlich

(1.1.6)    in einer sechsten Unterstufe die in Unterstufe (1.1.5) gewonnene Suspension bei einer Temperatur von nicht mehr als 150°C - gegebenenfalls unter vermindertem Druck - bis zur Trockene eindampft, und dann

(1.2)    in einer zweiten Stufe das aus der ersten Stufe (1.1) erhaltene Katalysator-Vorprodukt in den eigentlichen Trägerkatalysator überführt, indem man zunächst

(1.2.1)    in einer ersten Unterstufe das aus der ersten Stufe (1.1) erhaltene Katalysator-Vorprodukt in einem wasserfreien Stickstoffstrom 60 bis 500 Minuten auf einer Temperatur von 150 bis 300°C hält, hierauf

(1.2.2)    in einer zweiten Unterstufe das aus Unterstufe (1.2.1) erhaltene Zwischenprodukt in einem wasserfreien, Sauerstoff in einer Konzentration von über 10 Vol.-% enthaltenen Gasstrom 10 bis 1000 Minuten auf einer Temperatur von 300 bis 900°C hält, und schließlich

(1.2.3)    in einer dritten Unterstufe das aus Unterstufe (1.2.2) erhaltene Zwischenprodukt in einem wasserfreien Stickstoffstrom 10 bis 300 Minuten auf einer Temperatur von 50 bis 400°C hält, sowie

(2)    als Cokatalysator einsetzt ein Lithiumalkyl der Formel LiR² - worin R² steht für eine C₁- bis C₁₂-Alkylgruppe -,

mit der Maßgabe, daß das Atomverhältnis Chrom im Trägerkatalysator (1) : Lithium im Cokatalysator (2) größer als 1 : 100 ist.

2. Trägerkatalysator (1) für die Phillips-Katalyse aus einem Trägerstoff, der mit oxidisch vorliegendem Chrom, oxidisch vorliegendem Phosphor sowie oxidisch vorliegendem Titan beladen ist, und der erhalten worden ist, indem man

(1.1)    in einer ersten Stufe ein mit den gewünschten Mengen Chrom, Phosphor sowie Titan beladenes Katalysator-Vorprodukt (1.1) herstellt aus

(1.1.a)    einem feinteiligen, porösen, silikatischen Trägerstoff,

(1.1.b)    einer ausgewählten, spezifischen Chromverbindung,

(1.1.c)     einer ausgewählten, spezifischen Phosphorverbindung sowie

(1.1.d)     einer ausgewählten, spezifischen Titanverbindung,
            und dann

(1.2)       in einer zweiten Stufe das aus der ersten Stufe erhaltene Katalysator-Vorprodukt (1.1) in einem wasserfreien, Sauerstoff in einer Konzentration von über 10 Vol.-% enthaltene Gasstrom 10 bis 1000 Minuten auf einer Temperatur von 300 bis 900°C hält und so in den eigentlichen Trägerkatalysator (1) über führt, dadurch gekennzeichnet, daß der Trägerkatalysator erhalten worden ist, indem man

(1.1)       in einer ersten Stufe ein Katalysator-Vorprodukt herstellt,
            indem man zunächst

(1.1.1)     in einer ersten Unterstufe aus

(1.1.1.1)   einem feinteiligen, porösen, silikatischen Trägerstoff, der einen Teilchendurchmesser von 1 bis 400 μm, ein Porenvolumen von 0,5 bis 3 cm$^3$/g sowie eine Oberfläche von 100 bis 1000 m$^2$/g besitzt, und

(1.1.1.2)   einem inerten organischen Lösungsmittel

unter guter Durchmischung eine Suspension herstellt, mit der Maßgabe, daß auf 100 Gewichtsteile des Trägerstoffs (1.1.1.1) 150 bis 5000 Gewichtsteile des Lösungsmittels (1.1.1.2) entfallen, dann

(1.1.2)     in einer zweiten Unterstufe aus

(1.1.2.1)   einem feinteiligen, einen Teilchendurchmesser von weniger als 2000 μm aufweisenden Chromtrioxid (CrO$_3$) und

(1.1.2.2)   einem Lösungsmittel der unter (1.1.1.2) bezeichneten Art

unter guter Durchmischung eine Suspension herstellt, mit der Maßgabe, daß auf 1 Gewichtsteil des Chromtrioxids (1.1.2.1) mehr als 1 Gewichtsteil des Lösungsmittels (1.1.2.2) entfällt, hierauf

(1.1.3)     in einer dritten Unterstufe

(1.1.3.1)   die aus (1.1.2) resultierende Suspension mit

(1.1.3.2)   einer Phosphorverbindung der Formel P(O)(OR)$_3$ oder P(O)H(OR)$_2$ - worin R steht für eine Alkyl-, Aryl- oder Cycloalkylgruppe, die nicht mehr als 12 Kohlenstoffatome aufweist oder für Wasserstoff, mit der Maßgabe, daß mindestens ein R nicht für Wasserstoff steht - unter weiterer guter Durchmischung bei einer Temperatur von 0 bis 60°C vereinigt, mit der Maßgabe, daß auf 1 Gewichtsteil Chrom aus dem Chromtrioxid (1.1.2.1) 0,6 bis 10 Gewichtsteile Phosphor aus der Phosphorverbindung (1.1.3.2) entfallen, und das Ganze 5 bis 300 Minuten bei der genannten Temperatur hält, danach

(1.1.4)     in einer vierten Unterstufe

(1.1.4.1)   die aus (1.1.1) resultierende Suspension mit

(1.1.4.2)   dem aus der Unterstufe (1.1.3) erhaltenen Umsetzungsprodukt

unter guter Durchmischung bei einer Temperatur von 0 bis 60°C vereinigt, mit der Maßgabe, daß auf 100 Gewichtsteile des Trägerstoffs (1.1.1.1) 0,1 bis 5 Gewichtsteile Chrom aus dem Chromtrioxid (1.1.2.1) entfallen, und das Ganze 5 bis 300 Minuten bei der genannten Temperatur hält, daraufhin

(1.1.5)     in einer fünften Unterstufe

(1.1.5.1)   die in Unterstufe (1.1.4) entstandene Suspension mit

(1.1.5.2)   einer Titanverbindung der Formel Ti(OR$^1$)$_4$ - worin R$^1$ steht für eine Alkyl-, Aryl- oder Cycloalkylgruppe, die nicht mehr als 12 Kohlenstoffatome aufweist,

unter weiterer guter Durchmischung bei einer Temperatur von 0 bis 60°C vereinigt, mit der Maßgabe, daß auf 100 Gewichtsteile des Trägerstoffs (1.1.1.1) 0,1 bis 10 Gewichtsteile Titan aus der Titanverbindung (1.1.5.2) entfallen, und das Ganze 5 bis 300 Minuten bei der genannten Temperatur hält, und schließlich

(1.1.6)     in einer sechsten Unterstufe die in Unterstufe (1.1.5) gewonnene Suspension bei einer Temperatur von nicht mehr als 150°C - gegebenenfalls unter vermindertem Druck - bis zur Trockene eindampft, und dann

(1.2)       in einer zweiten Stufe das aus der ersten Stufe (1.1) erhaltene Katalysator-Vorprodukt in den eigentlichen Trägerkatalysator überführt, indem man zunächst

(1.2.1)     in einer ersten Unterstufe das aus der ersten Stufe (1.1) erhaltene Katalysator-Vorprodukt in einem wasserfreien Stickstoffstrom 60 bis 500 Minuten auf einer Temperatur von 150 bis 300°C hält, hierauf

(1.2.2)     in einer zweiten Unterstufe das aus Unterstufe (1.2.1) erhaltene Zwischenprodukt in einem wasserfreien, Sauerstoff in einer Konzentration von über 10 Vol.-% enthaltenen Gasstrom 10 bis 1000 Minuten auf einer Temperatur von 300 bis 900°C hält, und schließlich

(1.2.3)     in einer dritten Unterstufe das aus Unterstufe (1.2.2) erhaltene Zwischenprodukt in einem wasserfreien Stickstoffstrom 10 bis 300 Minuten auf einer Temperatur von 50 bis 400°C hält.

EP 0 250 860 B1

**Claims**

1. A process for the preparation of ethene homopolymers and ethene copolymers containing minor amounts of copolymerized $C_3$-$C_{12}$-$\alpha$-monoalkenes, by polymerization of the monomer or monomers at from 30 to 150°C, under pressure from 2 to 150 bar, by Phillips catalysis using

| | |
|---|---|
| (1) | a supported catalyst consisting of a carrier which is laden with oxidic chromium, oxidic phosphorus and oxidic titanium and |
| (2) | a cocatalyst, the supported catalyst (1) being obtained by a procedure in which |
| (1.1) | in a first stage, a catalyst intermediate (1.1) laden with the desired amounts of chromium, phosphorus and titanium is prepared from |
| (1.1.a) | a finely divided, porous silicate carrier, |
| (1.1.b) | a selected, specific chromium compound, |
| (1.1.c) | a selected, specific phosphorus compound and |
| (1.1.d) | a selected, specific titanium compound, and then |
| (1.2) | in a second stage, the catalyst intermediate (1.1) obtained from the first stage is kept in an anhydrous gas stream containing oxygen in a concentration of more than 10% by volume for from 10 to 1000 minutes at from 300 to 900°C, thus converted to the actual supported catalyst (1), wherein |
| (1) | a supported catalyst is used which is obtained by a procedure in which |
| (1.1) | in a first stage, a catalyst intermediate is produced by a method in which first |
| (1.1.1) | in a first substage, a suspension is prepared from |
| (1.1.1.1) | a finely divided, porous, silicate carrier which has a particle diameter of from 1 to 400 μm, a pore volume of from 0.5 to 3 cm³/g and a specific surface area of from 100 to 1000 m²/g and |
| (1.1.1.2) | an inert organic solvent, with thorough mixing, with the proviso that from 150 to 5000 parts by weight of the solvent (1.1.1.2) are used per 100 parts by weight of the carrier (1.1.1.1), then |
| (1.1.2) | in a second substage, a suspension is prepared from |
| (1.1.2.1) | a finely divided chromium trioxide ($CrO_3$) having a particle diameter of less than 200 μm, and |
| (1.1.2.2) | a solvent of the type defined under (1.1.1.2), with thorough mixing, with the proviso that more than 1 part by weight of the solvent (1.1.2.2) are used per part by weight of the chromium trioxide (1.1.2.1), thereafter |
| (1.1.3) | in a third substage, |
| (1.1.3.1) | the suspension resulting from (1.1.2) is combined with |
| (1.1.3.2) | a phosphorus compound of the formula $P(O)(OR)_3$ or $P(O)H(OR)_2$, where R is an alkyl, aryl or cycloalkyl group of not more than 12 carbon atoms or hydrogen with the proviso that 1 or more radicals R must not be hydrogen, with further thorough mixing at from 0 to 60°C with the proviso that from 0.6 to 10 parts by weight of phosphorus from the phosphorus compound (1.1.3.2) are present per part by weight of chromium from the chromium trioxide (1.1.2.1), and the entire mixture is kept for the stated temperature for from 5 to 300 minutes, thereafter |
| (1.1.4) | in a fourth substage, |
| (1.1.4.1) | the suspension resulting from (1.1.1) is combined with |
| (1.1.4.2) | the reaction product obtained in substage (1.1.3) with thorough mixing at from 0 to 60°C with the proviso that from 0.1 to 5 parts by weight of chromium from the chromium trioxide (1.1.2.1) are present per 100 parts by weight of the carrier (1.1.1.1), and the entire mixture is kept at the stated temperature for from 5 to 300 minutes, then |
| (1.1.5) | in a fifth substage, |
| (1.1.5.1) | the suspension formed in substage (1.1.4) is combined with |
| (1.1.5.2) | a titanium compound of the formula $Ti(OR^1)_4$, where $R^1$ is an alkyl, aryl or cycloalkyl group of not more than 12 carbon atoms, |

with further thorough mixing at from 0 to 60°C with the proviso that from 0.1 to 10 parts by weight of titanium from the titanium compounds (1.1.5.2) are present per 100 parts by weight of the carrier (1.1.1.1), and the entire mixture is kept at the stated temperature for from 5 to 300 minutes, and finally

| | |
|---|---|
| (1.1.6) | in a sixth substage, the suspension obtained in substage (1.1.5) is evaporated to dryness at not more than 150°C under atmospheric or reduced pressure, and then |
| (1.2) | in a second stage, the catalyst intermediate obtained in the first stage (1.1) is converted to the actual supported catalyst by a procedure in which first (1.2.1) in a first substage, the catalyst intermediate obtained in the first stage (1.1) is kept in an anhydrous stream of nitrogen for from 60 to 500 minutes at from 150 to 300°C, thereafter |
| (1.2.2) | in a second substage, the intermediate obtained in substage (1.2.1) is kept in an anhydrous gas stream containing oxygen in a concentration of more than 10% by volume for from 10 to 1000 minutes |

11

at from 300 to 900°C, and finally

(1.2.3)     in a third substage, the intermediate obtained in substage (1.2.2) is kept in an anhydrous stream of nitrogen for from 10 to 300 minutes at from 50 to 400°C, and

(2)     a lithiumalkyl of the formula $LiR^2$, where $R^2$ is $C_1$-$C_{12}$-alkyl is used as a cocatalyst,

with the proviso that the atomic ratio of chromium in the supported catalyst (1) to lithium in the cocatalyst (2) is greater than 1:100.

2. A supported catalyst (1) for Phillips catalysis, consisting of a carrier which is laden with oxidic chromium, oxidic phosphorus and oxidic titanium, and obtained by a procedure in which

(1.1)     in a first stage, a catalyst intermediate (1.1) laden with the desired amounts of chromium, phosphorus and titanium is prepared from

(1.1.a)     a finely divided, porous silicate carrier,

(1.1.b)     a selected, specific chromium compound,

(1.1.c)     a selected, specific phosphorus compound and

(1.1.d)     a selected, specific titanium compound and then

(1.2)     in a second stage, the catalyst intermediate (1.1) obtained from the first stage is kept in an anhydrous gas stream containing oxygen in a concentration of more than 10% by volume for from 10 to 1000 minutes at from 300 to 900°C, thus converted to the actual supported catalyst (1),

wherein the supported catalyst is obtained by a method in which

(1.1)     in a first stage, a catalyst intermediate is produced by a method in which first

(1.1.1)     in a first substage, a suspension is prepared from

(1.1.1.1)     a finely divided, porous, silicate carrier which has a particle diameter of from 1 to 400 μm, a pore volume of from 0.5 to 3 cm³/g and a specific surface area of from 100 to 1000 m²/g and

(1.1.1.2)     an inert organic solvent, with thorough mixing, with the proviso that from 150 to 5000 parts by weight of the solvent (1.1.1.2) are used per 100 parts by weight of the carrier (1.1.1.1), then (1.1.2) in a second substage, a suspension is prepared from

(1.1.2.1)     a finely divided chromium trioxide ($CrO_3$) having a particle diameter of less than 2000 μm, and

(1.1.2.2)     a solvent of the type defined under (1.1.1.2), with thorough mixing, with the proviso that more than 1 part by weight of the solvent (1.1.2.2) are used per part by weight of the chromium trioxide (1.1.2.1), thereafter (1.1.3) in a third substage,

(1.1.3.1)     the suspension resulting from (1.1.2) is combined with

(1.1.3.2)     a phosphorus compound of the formula $P(O)(OR)_3$ or $P(OH)H(OR)_2$, where R is an alkyl, aryl or cycloalkyl group of not more than 12 carbon atoms or hydrogen with the proviso that 1 or more radicals R must not be hydrogen, with further thorough mixing at from 0 to 60°C with the proviso that from 0.6 to 10 parts by weight of phosphorus from the phosphorus compound (1.1.3.2) are present per part by weight of chromium from the chromium trioxide (1.1.2.1), and the entire mixture is kept at the stated temperature for from 5 to 300 minutes, thereafter (1.1.4) in a fourth substage,

(1.1.4.1)     the suspension resulting from (1.1.1) is combined with

(1.1.4.2)     the reaction product obtained in substage (1.1.3) with thorough mixing at from 0 to 60°C with the proviso that from 0.1 to 5 parts by weight of chromium from the chromium trioxide (1.1.2.1) are present per 100 parts by weight of the carrier (1.1.1.1), and the entire mixture is kept at the stated temperature for from 5 to 300 minutes, then

(1.1.5)     in a fifth substage,

(1.1.5.1)     the suspension formed in substage (1.1.4) is combined with

(1.1.5.2)     a titanium compound of the formula $Ti(OR^1)_4$, where $R^1$ is an alkyl, aryl or cycloalkyl group of not more than 12 carbon atoms,

with further thorough mixing at from 0 to 60°C with the proviso that from 0.1 to 10 parts by weight of titanium from the titanium compound (1.1.5.2) are present per 100 parts by weight of the carrier (1.1.1.1), and the entire mixture is kept at the stated temperature for from 5 to 300 minutes, and finally

(1.1.6)     in a sixth substage, the suspension obtained in substage (1.1.5) is evaporated to dryness at not more than 150°C under atmospheric or reduced pressure, and then

(1.2)     in a second stage, the catalyst intermediate obtained in the first stage (1.1) is converted to the actual supported catalyst by a procedure in which first (1.2.1) in a first substage, the catalyst intermediate obtained in the first stage (1.1) is kept in an anhydrous stream of nitrogen for from 60 to 500 minutes at from 150 to 300°C, thereafter

(1.2.2)     in a second substage, the intermediate obtained in substage (1.2.1) is kept in an anhydrous gas stream containing oxygen in a concentration of more than 10% by volume of from 10 to 1000 minutes at from 300 to 900°C, and finally

(1.2.3)    in a third substage, the intermediate obtained in substage (1.2.2) is kept in an anhydrous stream of nitrogen for from 10 to 300 minutes at from 50 to 400°C.

## Revendications

1. Procédé de préparation d'homopolymères de l'éthylène et de copolymères de l'éthylène comportant des quantités mineures d'alpha-monoalcènes en $C_3$ à $C_{12}$ en liaison polymère, par polymérisation du ou des monomères, à des températures de 30 à 150°C et sous des pressions de 2 à 150 bar, par catalyse de Phillips, à l'aide

(1)    d'un catalyseur supporté, constitué d'un support chargé de chrome à l'état oxydé, de phosphore à l'état oxydé et de titane à l'état oxydé, et

(2)    d'un cocatalyseur, le catalyseur supporté (1) ayant été obtenu

(1.1)    en préparant, dans une première étape, un précurseur de catalyseur (1.1), chargé des quantités souhaitées de chrome, de phosphore et de titane, préparé à partir

(1.1.a)    d'un support au silicate poreux, finement divisé,

(1.1.b)    d'un composé spécifique et choisi du chrome,

(1.1.c)    d'un composé spécifique et choisi du phosphore, et

(1.1.d)    d'un composé spécifique et choisi du titane, puis

(1.2)    dans une deuxième étape, en maintenant pendant 10 à 1000 minutes à une température de 300 à 900°C le précurseur de catalyseur (1.1) obtenu dans la première étape, dans un courant de gaz anhydre contenant de l'oxygène à une concentration supérieure à 10 % en volume, et en le convertissant ainsi en le catalyseur supporté (1) proprement dit,

caractérisé en ce que

(1)    on utilise un catalyseur supporté que l'on a obtenu de la manière suivante :

(1.1)    dans une première étape, on prépare un précurseur de catalyseur en procédant comme suit :

(1.1.1)    tout d'abord, dans une première sous-étape, on prépare, en mélangeant intimement, une suspension à partir

(1.1.1.1)    d'un support au silicate poreux finement divisé, qui a une granulométrie de 1 à 400 µm, un volume des pores de 0,5 à 3 $cm^3/g$ et une aire spécifique de 100 à 1000 $m^2/g$, et

(1.1.1.2)    d'un solvant organique inerte, à la condition que l'on ait pour 100 parties en poids du support (1.1.1.1) 150 à 5000 parties en poids du solvant (1.1.1.2), puis

(1.1.2)    dans une deuxième sous-étape, on prépare, en mélangeant intimement, une suspension à partir

(1.1.2.1)    d'un trioxyde de chrome ($CrO_3$) finement divisé, ayant une granulométrie inférieure à 2000 µm, et

(1.1.2.2)    d'un solvant du type désigné en (1.1.1.2),

à la condition que l'on ait par partie en poids du trioxyde de chrome (1.1.2.1) plus d'une partie en poids du solvant (1.1.2.2), puis

(1.1.3)    dans une troisième sous-étape, et en poursuivant le mélange intime à une température de 0 à 60°C, on combine

(1.1.3.1)    la suspension obtenue en (1.1.2), avec (1.1.3.2) un composé du phosphore de formule $P(O)(OR)_3$ ou $P(O)H(OR)_2$, où R représente un groupe alkyle, aryle ou cycloalkyle n'ayant pas plus de 12 atomes de carbone, ou encore un hydrogène, à la condition qu'au moins un R ne soit pas un hydrogène,

à la condition que l'on ait par partie en poids de chrome provenant du trioxyde de chrome (1.1.2.1) 0,6 à 10 parties en poids de phosphore provenant du composé du phosphore, et maintient l'ensemble à la température indiquée pendant 5 à 300 minutes, puis

(1.1.4)    dans une quatrième sous-étape, en mélangeant intimement à une température de 0 à 60°C, on combine

(1.1.4.1)    la suspension obtenue en (1.1.1) avec

(1.1.4.2)    le produit de réaction obtenu dans la sous-étape (1.1.3),

à la condition que l'on ait pour 100 parties en poids du support (1.1.1.1) 0,1 à 5 parties en poids de chrome provenant du trioxyde de chrome (1.1.2.1), et on maintient l'ensemble pendant 5 à 300 minutes à la température indiquée, puis

(1.1.5)    dans une cinquième sous-étape, en poursuivant le mélange intime à une température de 0 à 60°C, on combine

(1.1.5.1)    la suspension obtenue dans la sous-étape (1.1.4) avec

(1.1.5.2)    un composé du titane de formule $Ti(OR^1)_4$, où $R^1$ représente un radical alkyle, aryle ou cycloalkyle n'ayant pas plus de 12 atomes de carbone,

à la condition que l'on ait pour 100 parties en poids du support (1.1.1.1) 0,1 à 10 parties en poids de titane provenant du composé du titane (1.1.5.2), et on maintient l'ensemble pendant 5 à 300 minutes à la température indiquée, et finalement

(1.1.6)    dans une sixième sous-étape, on vaporise jusqu'à la siccité la suspension obtenue dans la sous-étape (1.1.5), à une température non supérieure à 150°C, éventuellement sous pression réduite, et puis

(1.2)    dans une deuxième étape, on convertit le précurseur de catalyseur obtenu dans la première étape (1.1) en le catalyseur supporté proprement dit, par les opérations suivantes :

(1.2.1)    tout d'abord, dans une première sous-étape, on maintient le précurseur de catalyseur obtenu dans la première étape (1.1) dans un courant d'azote anhydre pendant 60 à 500 minutes à une température de 150 à 300°C, puis

(1.2.2)    dans une deuxième sous-étape, on maintient pendant 10 à 1000 minutes à une température de 300 à 900°C le produit intermédiaire obtenu dans la sous-étape (1.2.1) dans un courant gazeux anhydre contenant de l'oxygène à une concentration supérieure à 10 % en volume, et enfin

(1.2.3)    dans une troisième sous-étape, on maintient pendant 10 à 300 minutes à une température de 50 à 400°C le produit intermédiaire obtenu dans la sous-étape (1.2.2) dans un courant d'azote anhydre, et

(2)    on utilise comme cocatalyseur un alkyllithium de formule $LiR^2$, où $R^2$ est un groupe alkyle en $C_1$ à $C_{12}$,

à la condition que le rapport atomique du chrome du catalyseur supporté (1) au lithium du cocatalyseur (2) soit supérieur à 1:100.

2. Catalyseur supporté (1) pour la catalyse de Phillips, constitué d'un support chargé de chrome à l'état oxydé, de phosphore à l'état oxydé et de titane à l'état oxydé, et que l'on a obtenu de la manière suivante :

(1.1)    en préparant, dans une première étape, un précurseur de catalyseur (1.1), chargé des quantités souhaitées de chrome, de phosphore et de titane, préparé à partir

(1.1.a)    d'un support au silicate,poreux, finement divisé,

(1.1.b)    d'un composé spécifique et choisi du chrome,

(1.1.c)    d'un composé spécifique et choisi du phosphore, et

(1.1.d)    d'un composé spécifique et choisi du titane, et puis

(1.2)    dans une deuxième étape, en maintenant pendant 10 à 1000 minutes à une température de 300 à 900°C le précurseur de catalyseur (1.1) obtenu dans la première étape, dans un courant de gaz anhydre contenant de l'oxygène à une concentration supérieure à 10 % en volume, et en le convertissant ainsi en le catalyseur supporté (1) proprement dit,

caractérisé en ce qu'on a obtenu le catalyseur supporté de la manière suivante :

(1.1)    dans une première étape, on prépare un précurseur de catalyseur en procédant comme suit :

(1.1.1)    tout d'abord, dans une première sous-étape, on prépare,en mélangeant intimement,une suspension à partir

(1.1.1.1)    d'un support au silicate poreux finement divisé, qui a une granulométrie de 1 à 400 µm, un volume des pores de 0,5 à 3 cm³/g et une aire spécifique de 100 à 1000 m²/g, et

(1.1.1.2)    d'un solvant organique inerte,

à la condition que l'on ait pour 100 parties en poids du support (1.1.1.1) 150 à 5000 parties en poids du solvant (1.1.1.2), puis

(1.1.2)    dans une deuxième sous-étape, on prépare, en mélangeant intimement,une suspension à partir

(1.1.2.1)    d'un trioxyde de chrome ($CrO_3$) finement divisé, ayant une granulométrie inférieure à 2000 µm, et

(1.1.2.2)    d'un solvant du type désigné en (1.1.1.2),

à la condition que l'on ait par partie en poids du trioxyde de chrome (1.1.2.1) plus d'une partie en poids du solvant (1.1.2.2), puis

(1.1.3)    dans une troisième sous-étape, et en poursuivant le mélange intime à une température de 0 à 60°C, on combine

(1.1.3.1)    la suspension obtenue en (1.1.2), avec

(1.1.3.2)    un composé du phosphore de formule $P(O)(OR)_3$ ou $P(O)H(OR)_2$, où R représente un groupe alkyle, aryle ou cycloalkyle n'ayant pas plus de 12 atomes de carbone, ou encore un hydrogène, à la condition qu'au moins un R ne soit pas un hydrogène,

à la condition que l'on ait par partie en poids de chrome provenant du trioxyde de chrome (1.1.2.1) 0,6 à 10 parties en poids de phosphore provenant du composé du phosphore, et on maintient l'ensemble à la température indiquée pendant 5 à 300 minutes, puis

(1.1.4)     dans une quatrième sous-étape, en mélangeant intimement à une température de 0 à 60°C, on combine

(1.1.4.1)     la suspension obtenue en (1.1.1) avec (1.1.4.2) le produit de réaction obtenu dans la sous-étape (1.1.3),

à la condition que l'on ait pour 100 parties en poids du support (1.1.1.1) 0,1 à 5 parties en poids de chrome provenant du trioxyde de chrome (1.1.2.1), et on maintient l'ensemble pendant 5 à 300 minutes à la température indiquée, puis

(1.1.5)     dans une cinquième sous-étape, en poursuivant le mélange intime à une température de 0 à 60°C, on combine

(1.1.5.1)     la suspension obtenue dans la sous-étape (1.1.4) avec

(1.1.5.2)     un composé du titane de formule $Ti(OR^1)_4$, où $R^1$ représente un radical alkyle, aryle ou cycloalkyle n'ayant pas plus de 12 atomes de carbone,

à la condition que l'on ait pour 100 parties en poids du support (1.1.1.1) 0,1 à 10 parties en poids de titane provenant du composé du titane (1.1.5.2), et on maintient l'ensemble pendant 5 à 300 minutes à la température indiquée, et finalement

(1.1.6)     dans une sixième sous-étape, on vaporise jusqu'à la siccité la suspension obtenue dans la sous-étape (1.1.5), à une température non supérieure à 150°C, éventuellement sous pression réduite, et puis

(1.2)     dans une deuxième étape, on convertit le précurseur de catalyseur obtenu dans la première étape (1.1) en le catalyseur supporté proprement dit, par les opérations suivantes :

(1.2.1)     tout d'abord, dans une première sous-étape, on maintient le précurseur de catalyseur obtenu dans la première étape (1.1) dans un courant d'azote anhydre pendant 60 à 500 minutes à une température de 150 à 300°C, puis

(1.2.2)     dans une deuxième sous-étape, on maintient pendant 10 à 1000 minutes à une température de 300 à 900°C le produit intermédiaire obtenu dans la sous-étape (1.2.1) dans un courant gazeux anhydre contenant de l'oxygène à une concentration supérieure à 10 % en volume, et enfin

(1.2.3)     dans une troisième sous-étape, on maintient pendant 10 à 300 minutes à une température de 50 à 400°C le produit intermédiaire obtenu dans la sous-étape (1.2.2) dans un courant d'azote anhydre.